(19) Europäisches Patentamt
European Patent Office
Office européen des brevets

(11) **EP 1 632 943 B1**

(12) **EUROPEAN PATENT SPECIFICATION**

(45) Date of publication and mention of the grant of the patent:
**02.07.2014 Bulletin 2014/27**

(51) Int Cl.:
***G11B 20/00*** (2006.01)   ***G06F 21/10*** (2013.01)
***H04L 29/06*** (2006.01)

(21) Application number: **05018783.0**

(22) Date of filing: **30.08.2005**

(54) **Method of preventing multimedia copy**

Verfahren zum Kopierschutz von Multimedia

Procédé pour protéger multimédia contre la copie

(84) Designated Contracting States:
**DE FR GB**

(30) Priority: **02.09.2004 KR 2004069943**

(43) Date of publication of application:
**08.03.2006 Bulletin 2006/10**

(73) Proprietor: **LG Electronics Inc.**
**Seoul 150-721 (KR)**

(72) Inventor: **Kim, Young Kuk**
**3(sam)dong, Jungnang-gu**
**Seoul (KR)**

(74) Representative: **Katérle, Axel et al**
**Wuesthoff & Wuesthoff**
**Patent- und Rechtsanwälte**
**Schweigerstraße 2**
**81541 München (DE)**

(56) References cited:
**EP-A- 0 989 710    EP-A- 1 280 149**
**WO-A-00/62232    WO-A-01/93000**
**WO-A-02/35331    WO-A-99/55055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

### Field of the Invention

The present invention relates to a method of preventing a multimedia copy. Although the present invention is suitable for a wide scope of applications, it is particularly suitable for preventing an illegal multimedia copy between terminals.

### Discussion of the Related Art

Generally, various communication providers provide a variety of multimedia download services.

An operation of a conventional multimedia download service is explained as follows.

First of all, a user equipment accesses a prescribed wireless or wire Internet.

Subsequently, the user equipment accesses a server of a contents provider that provides multimedia or a server of a download service provider.

Once a user selects specific multimedia via the user equipment, the corresponding server informs the user of billing information according to a use of the multimedia.

If the user requests a download of the corresponding multimedia via the user equipment, the corresponding download is performed via the wireless Internet.

After completion of the download of the corresponding multimedia to the user equipment, the downloaded multimedia is stored in the user equipment. In doing so, the server generates billing-associated information for the user.

The user uses the multimedia stored in his user equipment (image output, sound output, etc.). In this case, the multimedia is the general term for sound data such as MMF, MIDI, MPS and the like and image data such as BMP, JPG and the like.

The multimedia stored intact in the user equipment. And, the user equipment plays back the stored data using a built-in decoder.

And, the multimedia stored in the user equipment can be deleted together with the associated information if the user wishes.

Meanwhile, since the contents provider has the copyright of the multimedia downloaded to the user equipment, the corresponding multimedia should not be distributed without permission.

Yet, it is impossible for the contents provider to manage his copyright protection for the downloaded multimedia.

Namely, as the user equipment becomes equipped with a huge storage space, the multimedia having been downloaded to the user equipment can be distributed without permission in the following methods.

In spite of the distribution without permission, the contents provider is unable to technically cope with the unilateral multimedia distribution without permission or other illegal uses of the multimedia.

1. Distribution without permission via Internet after downloading multimedia to a personal computer using a serial USB cable
2. Copy without permission to a user equipment from a personal computer after downloading multimedia to the personal computer using a serial USB cable
3. Multimedia transmission to another user equipment without permission using an image/sound transmission function provided to a user equipment after downloading the multimedia

Hence, many efforts have been made to research and study the multimedia security method by service providers according to the rising demand for security relating technology compensatory for the download service of the multimedia.

However, a concrete compensatory method for the multimedia downloaded via network (Internet or wireless Internet) has not been provided yet.

WO 99/55055 A1 may be construed to disclose a method according to the preamble of claim 1.

WO 00/62232 A1 may be construed to disclose a secure electronic commerce system and method providing for the distribution of artistic works in electronic formats. The system includes a server system which permits the author or owner of a work to upload and store an electronic copy of the work and allows a plurality of client systems to access the server system to download encrypted copies of the work. The server system includes an encryption system which stores a unique key for each client system and uses the key to encrypt each work download to a corresponding client system. Each client system includes an encryption system and a unique key which enables only that system to decrypt the work to all a consumer to use the work. The unique key can also be used to verify the identity of the client system.

WO 01/93000 A2 may be construed to disclose a method and a system for transferring digital data, such as that of music, over a communications network, such as the Internet, wherein an identification code supplied by the recipient or the recipient's utilization device, such as a computer or a device that utilizes the data, to the data provider is used to encrypt the data and send it to the recipient. A utilization device of the recipient, such as a music player, then decrypts the data by use of either the same identification code as a key or another key that is related to the identification code. The decryption key is not accessible by the recipient or the recipient's computer or utilization device in an unencrypted form.

## SUMMARY OF THE INVENTION

Accordingly, the present invention is directed to a method of preventing a multimedia copy that substantially obviates one or more problems due to limitations and disadvantages of the related art.

An object of the present invention is to provide a method of preventing a multimedia copy, by which an illegal use such as a distribution, a copy and the like without permission can be prevented through fast transformation and security management of multimedia downloaded via a network (Internet, wireless Internet, etc.).

Another object of the present invention is to provide a method of preventing a multimedia copy, by which an illegal inter-user-equipment copy of multimedia downloaded via a network (Internet, wireless Internet, etc.) can be prevented.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method according to claim 1 is provided.

Preferably, the encryption code is a result from encrypting the unique code using a hash function (see dependent claim 2). Preferably, the encryption code is a unique identifier of the user equipment (see dependent claim 3). More preferably, the unique code comprises an electronic serial number (ESN) of the user equipment. More preferably, the unique code includes a mobile identification number (MIN) of the user equipment. More preferably, the unique code includes an Internet protocol address of the user equipment (see dependent claim 4).

Preferably, the encrypting step is carried out in a manner of performing an exclusive OR operation on the generated encryption code and the prescribed block of the multimedia (see dependent claim 5).

Preferably, the method further includes the step of downloading rights objects including a file name of the multimedia and a validity period of the multimedia (see dependent claim 6). Preferably, the method further includes the step of downloading a validity period wherein the validity period is previously set by a copyright proprietor of the multimedia (see dependent claim 7).

In a comparative example, a method of preventing a multimedia copy in a user equipment includes the steps of receiving prescribed multimedia by a block unit, generating an encryption file to verify whether to use the received multimedia, and storing the multimedia of the block unit and the generated encryption file.

Preferably, in the comparative example, the encryption file is a result from encrypting rights objects of the multimedia using a hash function. More preferably, in the comparative example, the rights objects of the multimedia include a file name of the multimedia and a validity period of the multimedia.

Preferably, in the comparative example, the encryption file is a result of encrypting a specific block of the multimedia using a hash function.

Preferably, in the comparative example, the multimedia of the block unit and the generated encryption file are stored in a file system.

Preferably, in the comparative example, the method further includes the step of performing a verification of whether to use the stored multimedia using the stored encryption file if a reproduction of the stored multimedia is attempted. More preferably, in the comparative example, the verification performing step includes the steps of generating a new encryption file using at least one of rights objects of the multimedia and a specific block of the multimedia and deciding a presence or non-presence of a coincidence by comparing the generated new encryption file to the stored encryption file.

More preferably, in the comparative example, if the two encryption files are identical to each other, the stored multimedia is reproduced. More preferably, in the comparative example, if the two encryption files are not identical to each other, the stored multimedia and the stored encryption file are deleted. More preferably, in the comparative example, if the two encryption files are identical to each other, the verification is further performed using the validity period of the multimedia.

Preferably, in the comparative example, the method further includes the step of verifying whether to use the stored multimedia using the stored encryption file in case of booting the user equipment. More preferably, in the comparative example, the verifying step includes the steps of generating a new encryption file using at least one of rights objects of the multimedia and a specific block of the multimedia and deciding a presence or non-presence of a coincidence by comparing the generated new encryption file to the stored encryption file, wherein the rights objects includes a file name and a validity period of the multimedia.

More preferably, in the comparative example, if the two encryption files are identical to each other, a booting of the user equipment is normally completed. More preferably, in the comparative example, if the two encryption files are not identical to each other, the stored multimedia and the stored encryption file are deleted. More preferably, in the comparative example, if the two encryption files are identical to each other, the verification is further performed using the validity period of the multimedia.

Preferably, in the comparative example, the method further includes the step of receiving a validity period of the multimedia wherein the validity period is previously set by a copyright proprietor of the multimedia.

It is to be understood that both the foregoing general description and the following detailed description of the present invention are exemplary and explanatory and are intended to provide further explanation of the invention as claimed.

**BRIEF DESCRIPTION OF THE DRAWINGS**

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a flowchart of a process of downloading and storing multimedia according to the present invention;
FIG. 2 is a flowchart of a process of generating a security file according to the present invention;
FIG. 3 is a flowchart of a process of reproducing multimedia according to a first embodiment of the present invention;
FIG. 4 is a flowchart of a process of reproducing multimedia according to a second embodiment of the present invention
FIG. 5 is a flowchart of a process of verifying a legal use of multimedia and a process of deleting the corresponding multimedia according to a first embodiment of the present invention; and
FIG. 6 is a flowchart of a process of verifying a legal use of multimedia and a process of deleting the corresponding multimedia according to a second embodiment of the present invention.

**DETAILED DESCRIPTION OF THE INVENTION**

Reference will now be made in detail to the preferred embodiments of the present invention, examples of which are illustrated in the accompanying drawings. Wherever possible, the same reference numbers will be used throughout the drawings to refer to the same or like parts.

First of all, the present invention carries out the following procedures.

Firstly, multimedia is downloaded by block unit and each block data is transformed according to a predetermined pattern while the downloaded multimedia is stored in a user equipment.

Secondly, an encryption file for controlling the multimedia downloaded/stored in each user equipment is generated.

Thirdly, in reproducing the multimedia downloaded/stored to/in the user equipment, a legal use of the multimedia is verified. And, in booting the user equipment, a legal use of the downloaded/stored multimedia is verified. In particular, illegal multimedia according to the verification is deleted. And, in reproducing the downloaded/stored multimedia or in booting the user equipment, a control of the corresponding multimedia is carried out by a proprietor.

Meanwhile, the user equipment explained in the foregoing description or a user equipment to be explained later in the following description may include a personal computer enabling a general Internet access, a mobile terminal accessible to wireless Internet, or the like.

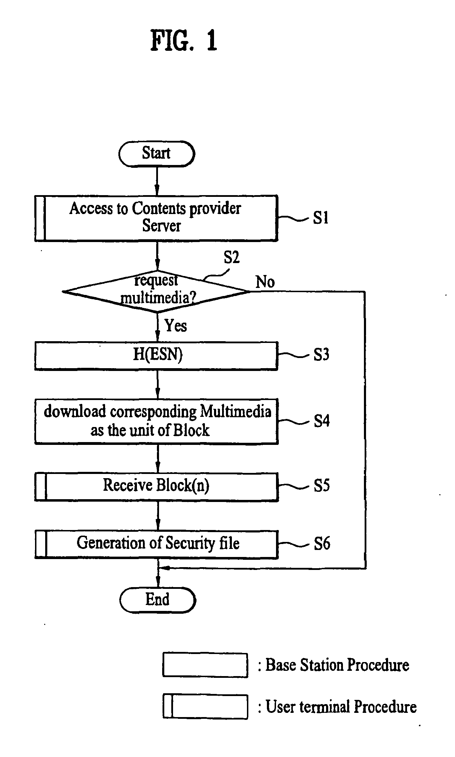

A procedure of downloading/storing multimedia is explained in detail with reference to FIG. 1 as follows.

FIG. 1 is a flowchart of a process of downloading and storing multimedia according to the present invention.

Referring to FIG. 1, a server operation is explained in the following.

First of all, if prescribed multimedia is requested from a user equipment, a server divides the requests multimedia into blocks by a block unit having a predetermined size. And, the server generates an encryption code for encrypting the divided blocks. In this case, the encryption code is generated in a manner that an encryption operation is performed on unique code(s) of the user equipment to identify the user equipment that has requested the multimedia.

Subsequently, the server encrypts each of the blocks with the generated encryption code before downloading the divided blocks. The server then downloads the encrypted blocks to the user equipment. While the server downloads the multimedia by the block unit, the server downloads rights objects of the multimedia including a file name, a validity period, etc of the multimedia.

An operation of the user equipment is carried out as follows.

First of all, the user equipment stores the multimedia, which was downloaded from the server, by block unit.

After completion of a download of the multimedia by receiving a last block, the user equipment automatically generates a security file (encryption file) to be used for verification of the stored multimedia in reproduction or initial drive (booting). In doing so, the user equipment uses a specific block of the multimedia or rights objects of the multimedia (wherein the rights objects includes file name, valid period, etc.) in generating the security file (encryption file).

And, the user equipment stores the generated security file (encryption file) in a storage means. In this case, the storage means includes a file system for managing the stored multimedia blocks.

Subsequently, if a reproduction of the stored multimedia is requested by a user or if the user equipment is initially driven (booted), the user equipment decides a presence or non-presence of coincidence with the security file (encryption file) and then confirms the valid period of the stored multimedia additionally. Through theses procedures, the stored multimedia is verified.

Hence, the user equipment failing in downloading the multimedia from the server properly is unable to acquire the entire data necessary for the verification. So, the user equipment failing in downloading the multimedia from the server properly cannot reproduce the multimedia even if the multimedia is obtained from another user equipment.

The present invention is explained in detail with reference to FIG. 1 as follows.

Referring to FIG. 1, a user equipment accesses prescribed Internet or prescribed wireless Internet.

Subsequently, the user equipment accesses a server (hereinafter called a contents server) of a contents provider that provides various contents (S1). Alternatively, the user equipment accesses a server of a download service provider. In the following, a case of downloading multimedia as contents from the contents server is exemplarily explained.

First of all, the contents server provides information relating to various multimedia to the user equipment having accessed the contents server.

If a user selects prescribed multimedia using a user interface (e.g., display and keys, etc.) provided to the user equipment, the contents server provides billing information (a fee for using the corresponding multimedia) for the selected multimedia to the user equipment. Hence, the user is able to confirm the corresponding billing information via the user interface.

Subsequently, if the user requests a download of at least one multimedia again using the user interface provided to the user equipment (S2), the contents server divides the corresponding multimedia into blocks by a block unit and then downloads the divided blocks to the user equipment (S4). While the server downloads the multimedia by the block unit, the server further downloads rights objects of the multimedia including a file name, a validity period, etc of the multimedia.

In the present invention, prior to the download of the multimedia, the contents server generates a unique encryption code to be allocated to the accessing user equipment (S3). And, the contents server carries out an exclusive OR operation on the generated encryption code with block data of the multimedia to be downloaded.

## [Formula 1]

$$Block(k) \ \cup \ H(ESN)$$

In Formula 1, 'k (= 1, 2, 3, ... , i, ... , n-1, n)' is a variable to indicate a corresponding number of block data in dividing the multimedia to be downloaded by the block unit. 'ESN' is an electronic serial number uniquely given to the user equipment. And, 'H(SEN)' is a hash function value for the ESN and corresponds to the encryption code.

The encryption code is a result from performing an encryption operation on the code (number or identifier), which is uniquely given to the user equipment or to identify a user, using a prescribed encryption function such as a hash function and the like. In this case, the number of identifier used for the encryption operation includes the ESN, an MIN (mobile identification number) uniquely given to the user equipment, an Internet protocol address or the like.

Hence, the contents server downloads a result (Formula 1) from performing the exclusive OR operation (XOR) on the encryption code with the block data configuring the multimedia to the user equipment.

Correspondingly, the user equipment receives the multimedia by the block unit. Once a last block Block(n) corresponding to the multimedia is received, the user equipment stores the entire received blocks in a storage means (e.g., system file). Substantially, the user equipment receives a plurality of results (blocks) of the exclusive OR operation between the encryption code and each of the block data configuring the multimedia. Hence 'Block(1) substantially indicates *'Block(1)* $\cup$ *H(ESN)'* and the last block Block(n) indicates *'Block(n)* $\cup$ *H(ESN)'*.

After completion of receiving the last block *'Block(n)* p *Block(n)* ∪ *H(ESN)'* (S5), the user equipment generates a security file (encryption file (S6).

Meanwhile, a procedure or process of generating the security file (encryption file) for the user equipment to control the downloaded multimedia is explained in the following.

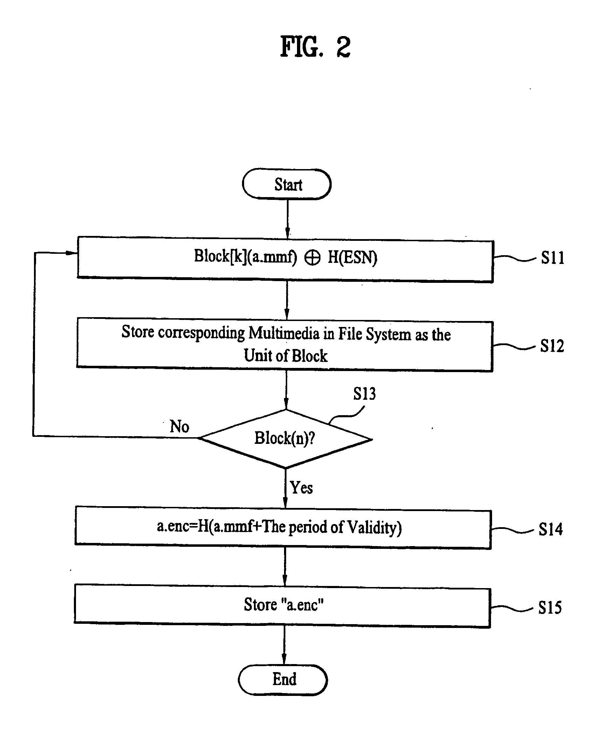

FIG. 2 is a flowchart of a process of generating a security file according to the present invention.

Referring to FIG. 2, it is assumed that a file name of multimedia downloaded to a user equipment is 'a.mmf'.

The user equipment stores the multimedia downloaded by the procedure shown in FIG. 1 in a storage means by a block unit (S11~S13). Hence, the multimedia stored in the storage means follows Formula 2.

## [Formula 2]

$$Block(k)\,[a.mmf]\ \cup\ H(ESN)$$

In Formula 2, 'k (= 1, 2, 3, ... , i, ... , n-1, n)' is a variable to indicate a corresponding number of block data in dividing the downloaded multimedia by the block unit and '[a.mmf]' is a file name of the multimedia.

Once a last block Block(n) *'Block(n)[a.mmf]* ∪ *H(ESN)'* is stored in the storage means, the user equipment generates a security file (encryption file) that follows Formula 3 (S14).

## [Formula 3]

$$security\ file\,[a.enc] = H(a.mmf + the\ period\ of\ validity)$$

In Formula 3, the validity period is used for a copyright proprietor to control the multimedia downloaded to the user equipment.

Meanwhile, the security file can be generated in various forms including the case of Formula 3.

For another instance, the security file is generated by combining a specific block of the multimedia itself with the validity period. Namely, the security file (encryption file) following Formula 4 is generated.

## [Formula 4]

$$security\ file\,[a.enc] = H(Block(k) + the\ period\ of\ validity)$$

In Formula 4, 'Block(k)' is pure block data configuring the multimedia or a result of performing an exclusive OR operation on the pure block data with the encryption code.

The user equipment stores the above-generated security file 'a.enc' in the storage means (S15).

For another instance, a security file is generated in a manner of performing an encryption operation on a multimedia file name only with the hash function. Namely, a security file (encryption file) in Formula 5 is generated.

## [Formula 5]

$$security\ file\,[a.enc] = H(a.mmf)$$

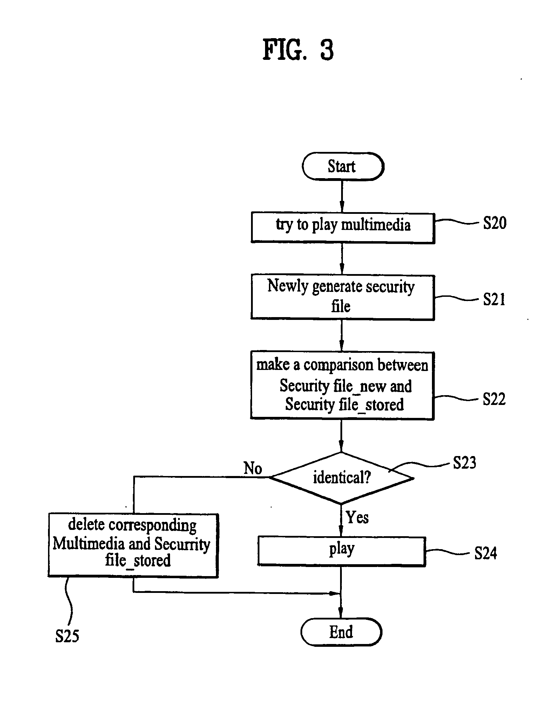

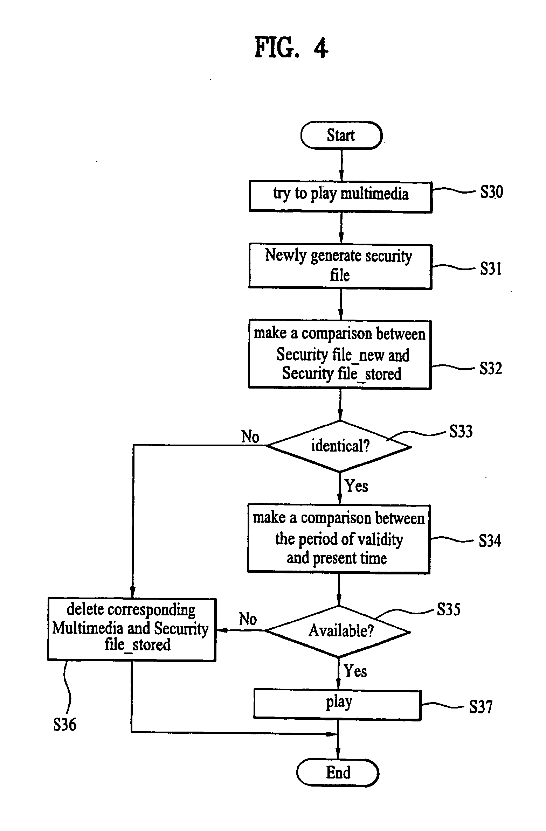

The security file if Formula 5 is more facilitated than the reproduction of the multimedia shown in FIG. 3 or FIG. 4.

Meanwhile, for the procedure shown in FIG. 2, in downloading the multimedia, the contents server downloads right objects including a validity period previously set by a copyright proprietor of the corresponding multimedia. If so, the user equipment links the validity period to the corresponding multimedia to store in the storage means.

And, the generation of the security file in FIG. 2 is automatically executed during the multimedia download or after completion of the multimedia download.

FIG. 3 is a flowchart of a process of reproducing multimedia according to a first embodiment of the present invention.

Referring to FIG. 3, a user equipment performs a verification on multimedia stored in a storage means. And, the user equipment reproduces (plays back) or deletes the multimedia according to a result of the verification. In this case, it is assumed that the verification is performed using the security file of Formula 5.

If a user attempts to reproduce prescribed multimedia stored in the storage means (e.g., file system) using a user interface provided to the user equipment (S20), the user equipment performs a hash function encryption operation to generate a security file (encryption file) using a file name 'a.mmf' of rights objects of the corresponding multimedia. Namely, the user equipment performs the encryption operation of Formula 5.

Hence, a new security file (Security file_new) is generated (S21).

Subsequently, the user equipment compares the newly generated security file (Security file_new) to a previously stored security file (Security file_stored) by linking the newly generated security file to the multimedia the user attempts to reproduce (S22). In this case, the previously stored security file (Security file_stored) is the one stored in the storage means after completion of the encryption operation using a multimedia file name in downloading the corresponding multimedia.

If the two compared security files are identical to each other, the corresponding stored multimedia is reproduced (S23, S24).

On the other hand, if the two compared security files are not identical to each other, the corresponding stored multimedia and its security file (encryption file) are deleted (S25).

FIG. 4 is a flowchart of a process of reproducing multimedia according to a second embodiment of the present invention.

Referring to FIG. 4, a user equipment performs a verification on multimedia stored in a storage means. And, the user equipment reproduces (plays back) or deletes the multimedia according to a result of the verification. In this case, it is assumed that the verification is performed using the security file of Formula 5. And, a validity period of rights objects of the multimedia is further used for the verification.

If a user attempts to reproduce prescribed multimedia stored in the storage means (e.g., file system) using a user interface provided to the user equipment (S30), the user equipment performs a hash function encryption operation to generate a security file (encryption file) using a file name 'a.mmf' of rights objects of the corresponding multimedia. Namely, the user equipment performs the encryption operation of Formula 5.

Hence, a new security file (Security file_new) is generated (S31).

Subsequently, the user equipment compares the newly generated security file (Security file_new) to a previously stored security file (Security file_stored) by linking the newly generated security file to the multimedia the user attempts to reproduce (S32). In this case, the previously stored security file (Security file_stored) is the one stored in the storage means after completion of the encryption operation using a multimedia file name in downloading the corresponding multimedia.

If the two compared security files are identical to each other, the validity period of the corresponding multimedia is further compared to a current date (time) (S33, S34).

Meanwhile, if the stored validity period stored does not exceed the current date (time) to make the period valid as a result of the comparison, it is decided that the corresponding multimedia is valid. And, the user equipment reproduces the corresponding multimedia successful in the verification (S35, S37).

On the other hand, if the two compared security files are not identical to each other, the user equipment deletes the corresponding stored multimedia and its security file (encryption file) (S36).

Moreover, if the stored validity period stored exceeds the current date (time) according to the result of the comparison between the validity period of the multimedia and the current date (time), the user equipment deletes the corresponding stored multimedia and its security file (encryption file) as well (S36).

As mentioned in the foregoing description, in FIG. 4 of the present invention, the validity period set by a copyright proprietor is compared to the current date (time) in the user equipment prior to reproducing the multimedia. And, if the validity period is expiry according to the comparison result, the corresponding stored multimedia is deleted. Preferably, the user equipment previously informs a copyright expiration via the user interface (e.g., display and speaker, etc.) prior to the deletion of the multimedia.

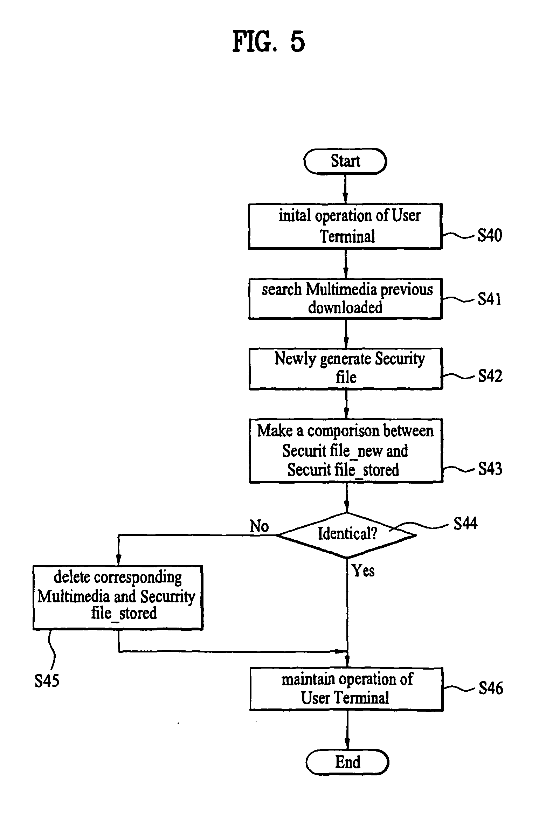

FIG. 5 is a flowchart of a process of verifying a legal use of multimedia and a process of deleting the corresponding multimedia according to a first embodiment of the present invention, in which a procedure executed in booting a user equipment is shown.

Referring to FIG. 5, a user equipment searches multimedia stored in a storage means (S41) in case of being driven or booted (S40).

If at least one multimedia is searched, an encryption operation is executed using the searched multimedia and rights objects (the rights objects includes file name, validity period, etc.) associated with the searched multimedia.

Namely, a new security file (encryption file) is generated in a manner of performing an encryption operation on at least one of a prescribed block of the searched multimedia and the validity period of the searched multimedia with a hash function (S42).

Subsequently, the user equipment compares the newly generated security file (Security file_new) to a previously stored security file (Security file_stored) by linking the newly generated security file to the multimedia the user attempts to reproduce (S43). In this case, the previously stored security file (Security file_stored) is the one stored in the storage means after completion of the encryption operation using a multimedia file name in downloading the corresponding multimedia.

If the two compared security files are identical to each other, the user equipment maintains to be normally driven (S44, S46). Namely, a booting of the user equipment is normally completed.

On the other hand, if the two compared security files are not identical to each other, the user equipment deletes the corresponding stored multimedia and the security file (encryption file) of the multimedia and then maintains to be normally driven (S44, S45). Namely, a booting of the user equipment is normally completed after the multimedia and the security file (encryption file) of the multimedia have been deleted.

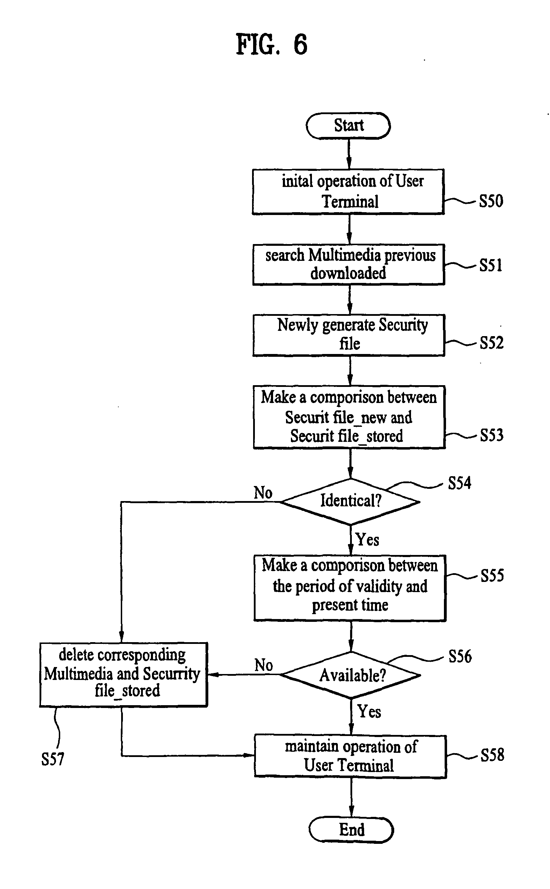

FIG. 6 is a flowchart of a process of verifying a legal use of multimedia and a process of deleting the corresponding multimedia according to a second embodiment of the present invention, in which a procedure executed in booting a user equipment is shown.

Referring to FIG. 6, a user equipment searches multimedia stored in a storage means (S51) in case of being driven or booted (S50).

If at least one multimedia is searched, an encryption operation is executed using the searched multimedia and information (e.g., file name, validity period, etc.) associated with the searched multimedia. Namely, a new security file (encryption file) is generated in a manner of performing an encryption operation on at least one of a prescribed block of the searched multimedia and the validity period of the searched multimedia with a hash function (S52).

Subsequently, the user equipment compares the newly generated security file (Security file_new) to a previously stored security file (Security file_stored) by linking the newly generated security file to the multimedia the user attempts to reproduce (S53). In this case, the previously stored security file (Security file_stored) is the one stored in the storage means after completion of the encryption operation using a multimedia file name in downloading the corresponding multimedia.

If the two compared security files are identical to each other, the validity period of the corresponding multimedia is further compared to a current date (time) (S54, S55).

If the stored validity period stored does not exceed the current date (time) to make the period valid as a result of the comparison, it is decided that the corresponding multimedia is valid. And, the user equipment maintains to be normally operated (S56, S58). Namely, a booting of the user equipment is normally completed.

On the other hand, if the two compared security files are not identical to each other, the user equipment deletes the corresponding stored multimedia and its security file (encryption file) (S57). Moreover, if the stored validity period stored exceeds the current date (time) according to the result of the comparison between the validity period of the multimedia and the current date (time), the user equipment deletes the corresponding stored multimedia and its security file (encryption file) as well (S57). Hence, the user equipment maintains to be normally driven after having deleted the corresponding stored multimedia and the security file (encryption file) of the corresponding stored multimedia (S58). Namely, the user equipment normally completes a booting of the user equipment after having deleted the multimedia and the security file (encryption file) of the multimedia.

In the above explanation, a fact that the user equipment is normally driven means that a reproduction of the stored multimedia is ready to be reproduced. It is a matter of course that the verification procedure shown in FIG. 3 or FIG. 4 is executed.

Meanwhile, the present invention is applicable to all kinds of client-to-server Internet services.

Accordingly, the present invention provides the following effects or advantages.

First of all, in a time point of downloading multimedia to a user equipment, the present invention enables a copyright of the downloaded multimedia to be set. Hence, the present invention can strengthen the protection of the copyright in the user equipment after completion of the download of the corresponding multimedia.

Secondly, the present invention provides a technical device of preventing such an illegal use as a case of distributing multimedia downloaded to a personal computer via Internet without permission, a case of copying multimedia downloaded to a personal computer into another user equipment without permission, a case of distributing multimedia, which is downloaded using an image/sound transmission function built in a user equipment, to another user equipment without permission and the like.

It will be apparent to those skilled in the art that various modifications and variations can be made in the present invention without departing from the scope of the inventions. Thus, it is intended that the present invention covers the modifications and variations of this invention provided they come within the scope of the appended claims.

**Claims**

1. A method of preventing a multimedia copy, the method comprising:

   dividing (S3), in a server, prescribed multimedia requested from a user equipment by a block unit;
   generating (S3), in the server, an encryption code for the user equipment by performing an encryption operation;
   encrypting (S3), in the server, each of the blocks of the prescribed multimedia with the generated encryption code; and
   downloading (S4) the encrypted blocks of the prescribed multimedia from the server to the user equipment,
   **characterized in that**:

   the encryption code is generated on at least one unique code for identifying the user equipment, and method further comprises:

   generating (S6), in the user equipment, a security file for verifying the downloaded prescribed multimedia, the security file being generated after completion of the downloading of the encrypted blocks of the prescribed multimedia and by using a specific block of the prescribed multimedia and a validity period of the prescribed multimedia; and
   verifying, in the user equipment, the downloaded prescribed multimedia by the generated security file before reproduction of the downloaded prescribed multimedia or when loading the user equipment.

2. The method of claim 1, wherein the encryption code is a result from encrypting the at least one unique code using a hash function.

3. The method of claim 2, wherein the at least one unique code is a unique identifier of the user equipment.

4. The method of claim 2, wherein the at least one unique code comprises at least one of an electric serial number, ESN, a mobile identification number, MIN, and an Internet protocol address of the user equipment.

5. The method of claim 1, wherein encrypting is carried out in a manner of performing an exclusive OR operation on the generated encryption code and the prescribed block of the multimedia.

6. The method of claim 1, further comprising the step of downloading rights objects, from the server to the user equipment, including the file name and the validity period of the multimedia, wherein the validity period is previously set by a copyright proprietor of the multimedia.

7. The method of claim 1, further comprising downloading, from the server to the user equipment, the validity period, wherein the validity period is previously set by a copyright proprietor of the multimedia.

**Patentansprüche**

1. Verfahren zum Verhindern einer Multimedienkopie, wobei das Verfahren umfasst:

   Unterteilen (S3), in einem Server, von vorgeschriebenen Multimedien, die von einer Benutzereinrichtung angefordert sind, durch eine Blockeinheit;
   Erzeugen (S3), in dem Server, eines Verschlüsselungscodes für die Benutzereinrichtung durch Durchführen eines Verschlüsselungsvorgangs;
   Verschlüsseln (S3), in dem Server, von jedem der Blöcke der vorgeschriebenen Multimedien mit dem erzeugten Verschlüsselungscode; und
   Downloaden (S4) der verschlüsselten Blöcke der vorgeschriebenen Multimedien von dem Server zu der Benutzereinrichtung,
   **dadurch gekennzeichnet, dass**:

   der Verschlüsselungscode auf zumindest einem eindeutigen Code zum Identifizieren der Benutzereinrichtung erzeugt wird und das Verfahren weiterhin umfasst:

   Erzeugen (S6), in der Benutzereinrichtung, einer Sicherheitsdatei zum Verifizieren der gedownloadeten vorgeschriebenen Multimedien, wobei die Sicherheitsdatei nach Vollendung des Downloads der verschlüsselten Blöcke der vorgeschriebenen Multimedien und durch Verwenden eines spezifischen Blocks der vorgeschriebenen Multimedien und einer Gültigkeitsspanne der vorgeschriebenen Multimedien erzeugt wird; und

Verifizieren, in der Benutzereinrichtung, der gedownloadeten vorgeschriebenen Multimedien durch die erzeugte Sicherheitsdatei vor der Wiedergabe der gedownloadeten vorgeschriebenen Multimedien oder bei Laden der Benutzereinrichtung.

**2.** Verfahren gemäß Anspruch 1, wobei der Verschlüsselungscode ein Ergebnis der Verschlüsselung des zumindest einen eindeutigen Codes unter Verwendung einer Hash-Funktion ist.

**3.** Verfahren gemäß Anspruch 2, wobei der zumindest eine eindeutige Code eine eindeutige Kennung der Benutzereinrichtung ist.

**4.** Verfahren gemäß Anspruch 2, wobei der zumindest eine eindeutige Code zumindest eine aus einer elektrischen Seriennummer, ESN, einer Mobilidentifikations-nummer, MIN, und einer Internetprotokolladresse der Benutzereinrichtung umfasst.

**5.** Verfahren gemäß Anspruch 1, wobei die Verschlüsselung derart durchgeführt wird, dass ein Exklusiv- ODER - Vorgang bei dem erzeugten Verschlüsselungscode und dem vorgeschriebenen Block der Multimedien durchgeführt wird.

**6.** Verfahren gemäß Anspruch 1, weiterhin umfassend den Schritt des Downloadens von Rechteobjekten von dem Server zu der Benutzereinrichtung, die den Dateinamen und die Gültigkeitsspanne der Multimedien umfassen, wobei die Gültigkeitsspanne vorab durch einen Urheberrechtsinhaber der Multimedien gesetzt wird.

**7.** Verfahren gemäß Anspruch 1, weiterhin umfassend Downloaden, von dem Server zu der Benutzereinrichtung, der Gültigkeitsspanne, wobei die Gültigkeitsspanne vorab durch einen Urheberrechtsinhaber der Multimedien gesetzt wird.

**Revendications**

**1.** Procédé de prévention d'une copie de multimédia, le procédé comprenant :

la division (S3), dans un serveur, d'un multimédia prescrit demandé par un équipement d'utilisateur par une unité de blocs ;
la génération (S3), dans le serveur, d'un code de cryptage pour l'équipement d'utilisateur en exécutant une opération de cryptage ;
le cryptage (S3), dans le serveur, de chacun des blocs du multimédia prescrit avec le code de cryptage généré ; et
le téléchargement (S4) des blocs cryptés du multimédia prescrit du serveur jusqu'à l'équipement d'utilisateur, **caractérisé en ce que** :

le code de cryptage est généré sur au moins un code unique pour identifier l'équipement d'utilisateur, et
le procédé comprend en outre :

la génération (S6), dans l'équipement d'utilisateur, d'un fichier de sécurité pour vérifier le multimédia prescrit téléchargé, le fichier de sécurité étant généré après la fin du téléchargement des blocs cryptés du multimédia prescrit et en utilisant un bloc spécifique du multimédia prescrit et une période de validité du multimédia prescrit ; et
la vérification, dans l'équipement d'utilisateur, du multimédia prescrit téléchargé par le fichier de sécurité généré avant la reproduction du multimédia prescrit téléchargé ou lors du chargement de l'équipement d'utilisateur.

**2.** Procédé selon la revendication 1, dans lequel le code de cryptage est le résultat du cryptage de l'au moins un code unique en utilisant une fonction de hachage.

**3.** Procédé selon la revendication 2, dans lequel l'au moins un code unique est un identifiant unique de l'équipement d'utilisateur.

4. Procédé selon la revendication 2, dans lequel l'au moins un code unique comprend au moins un parmi un numéro de série électrique, ESN, un numéro d'identification de mobile, MIN, et une adresse de protocole Internet de l'équipement d'utilisateur.

5. Procédé selon la revendication 1, dans lequel le cryptage est mis en oeuvre d'une manière à exécuter une opération OU exclusif sur le code de cryptage généré et le bloc prescrit du multimédia.

6. Procédé selon la revendication 1, comprenant en outre l'étape de téléchargement d'objets de droits, du serveur jusqu'à l'équipement d'utilisateur, incluant le nom de fichier et la période de validité du multimédia, dans lequel la période de validité est précédemment fixée par un propriétaire de copyright du multimédia.

7. Procédé selon la revendication 1, comprenant en outre le téléchargement, du serveur jusqu'à l'équipement d'utilisateur, de la période de validité, dans lequel la période de validité est précédemment fixée par un propriétaire de copyright du multimédia.

# FIG. 1

```
        ( Start )
           |
  +------------------------+
  | Access to Contents provider  |---- S1
  |        Server          |
  +------------------------+
           |
        S2 |
      <  request  >---- No ----+
      < multimedia? >          |
           |                   |
          Yes                  |
  +------------------------+   |
  |       H(ESN)           |---- S3
  +------------------------+   |
           |                   |
  +------------------------+   |
  | download corresponding Multimedia |---- S4
  |     as the unit of Block |        |
  +------------------------+   |
           |                   |
  +------------------------+   |
  |    Receive Block(n)    |---- S5
  +------------------------+   |
           |                   |
  +------------------------+   |
  | Generation of Security file |---- S6
  +------------------------+   |
           |                   |
           +-------------------+
           |
        ( End )
```

[ ] : Base Station Procedure

[| ] : User terminal Procedure

# FIG. 2

Start

Block[k](a.mmf) $\oplus$ H(ESN) — S11

Store corresponding Multimedia in File System as the Unit of Block — S12

S13

No ← Block(n)?

Yes

a.enc=H(a.mmf+The period of Validity) — S14

Store "a.enc" — S15

End

# FIG. 3

```
        ( Start )
             │
             ▼
   ┌──────────────────────┐
   │ try to play multimedia │──── S20
   └──────────────────────┘
             │
             ▼
   ┌──────────────────────┐
   │ Newly generate security │──── S21
   │         file            │
   └──────────────────────┘
             │
             ▼
   ┌──────────────────────┐
   │ make a comparison between │
   │ Security file_new and     │──── S22
   │ Security file_stored      │
   └──────────────────────┘
             │
             ▼
      No   ◇ identical? ◇ ──── S23
    ┌───────┘       │
    │             Yes│
    ▼               ▼
┌──────────────┐  ┌──────────┐
│ delete       │  │   play   │──── S24
│ corresponding│  └──────────┘
│ Multimedia   │        │
│ and Security │        │
│ file_stored  │        │
└──────────────┘        │
    │                   │
    └──────────►─────────┤
   S25                   ▼
                     ( End )
```

# FIG. 4

```
                    ┌─────────────┐
                    │    Start    │
                    └──────┬──────┘
                           │
                    ┌──────▼──────────┐
                    │ try to play     │── S30
                    │ multimedia      │
                    └──────┬──────────┘
                           │
                    ┌──────▼──────────┐
                    │ Newly generate  │── S31
                    │ security file   │
                    └──────┬──────────┘
                           │
                    ┌──────▼──────────────┐
                    │ make a comparison   │
                    │ between Security    │── S32
                    │ file_new and        │
                    │ Security file_stored│
                    └──────┬──────────────┘
                           │
          No        ┌──────▼──────┐  S33
    ┌───────────────┤  identical? │
    │               └──────┬──────┘
    │                      │ Yes
    │               ┌──────▼──────────────┐
    │               │ make a comparison   │
    │               │ between the period  │── S34
    │               │ of validity and     │
    │               │ present time        │
    │               └──────┬──────────────┘
    │                      │
┌───▼──────────────┐   No ┌▼───────────┐  S35
│ delete           │◄─────┤ Available? │
│ corresponding    │      └──────┬─────┘
│ Multimedia and   │             │ Yes
│ Securrity        │      ┌──────▼──────┐
│ file_stored      │      │    play     │── S37
└───┬──────────────┘      └──────┬──────┘
    │   S36                      │
    └──────────────►─────────────┤
                           ┌─────▼─────┐
                           │    End    │
                           └───────────┘
```

# FIG. 5

```
              ┌──────────┐
              │  Start   │
              └──────────┘
                   │
                   ▼
         ┌──────────────────────┐
         │ inital operation of User │ ─── S40
         │      Terminal        │
         └──────────────────────┘
                   │
                   ▼
         ┌──────────────────────┐
         │ search Multimedia previous │ ─── S41
         │      downloaded      │
         └──────────────────────┘
                   │
                   ▼
         ┌──────────────────────┐
         │ Newly generate Security │ ─── S42
         │        file          │
         └──────────────────────┘
                   │
                   ▼
         ┌──────────────────────┐
         │ Make a comporison between │
         │  Securit file_new and │ ─── S43
         │   Securit file_stored │
         └──────────────────────┘
                   │
                   ▼
   No         ◇ Identical? ◇ ─── S44
  ◄───────────
  │                │
  ▼               Yes
┌──────────────────┐ │
│ delete corresponding │ │
│ Multimedia and Securrity │ │
│    file_stored   │ │
└──────────────────┘ │
        │            │
       S45           ▼
        └──────►┌──────────────────────┐
                │ maintain operation of │ ─── S46
                │    User Terminal     │
                └──────────────────────┘
                           │
                           ▼
                     ┌──────────┐
                     │   End    │
                     └──────────┘
```

# FIG. 6

```
                    ( Start )
                        |
                        v
         +-------------------------------+
         |  inital operation of User     |----- S50
         |  Terminal                     |
         +-------------------------------+
                        |
                        v
         +-------------------------------+
         |  search Multimedia previous   |----- S51
         |  downloaded                   |
         +-------------------------------+
                        |
                        v
         +-------------------------------+
         |  Newly generate Security      |----- S52
         |  file                         |
         +-------------------------------+
                        |
                        v
         +-------------------------------+
         |  Make a comporison between    |
         |  Securit file_new and         |----- S53
         |  Securit file_stored          |
         +-------------------------------+
                        |
                        v
            No      < Identical? >-------- S54
   +----------------<            >
   |                    | Yes
   |                    v
   |     +-------------------------------+
   |     |  Make a comporison between    |----- S55
   |     |  the period of validity and   |
   |     |  present time                 |
   |     |                               |
   |     +-------------------------------+
   |                    |
   v                    v
+---------------+  No  < Available? >----- S56
| delete        |<----<             >
| corresponding |
| Multimedia and|      | Yes
| Securrity     |      v
| file_stored   |  +-------------------------------+
+---------------+  |  maintain operation of        |----- S58
       )           |  User Terminal                |
      S57          +-------------------------------+
       |                    |
       +------------------->|
                            v
                        ( End )
```

**EP 1 632 943 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9955055 A1
- WO 0062232 A1
- WO 0193000 A2